# EUROPEAN PATENT APPLICATION

(11) **EP 2 518 121 A1**
(43) Date of publication of application: **31.10.2012**
(21) Application number: 11164355.7
(22) Date of filing: 29.04.2011
(51) Int. Cl.: C09J 7/02, C09J 5/00

(54) **Water degradable adhesive tape**

(71) Applicant: Nitto Europe, 3600 Genk (BE)
(72) Inventor: Daemen, Annelien, 3910 Neerpelt (BE)
(74) Representative: Luys, Marie-José A.H.

(57) **Abstract**

The present invention relates to a water degradable protective adhesive tape, the tape comprising a layer of a water degradable polymer film, which is at least partly coated on at least one side, with a layer of a water degradable pressure sensitive adhesive. The present invention relates to the use of such a water degradable protective adhesive tape as a packaging material.

## Description

The present invention relates to the use of a water degradable protection adhesive tape as a wrapping material for an object, as well as to the water degradable protection tape and a method for removing it from an object coated with the tape.

It is well known in the art to cover delicate surfaces with a surface protection tape to prevent damaging thereof in the course of transport, working, curing, inspection, storing or any other process. Typical applications for surface protection tapes include protection of metal plate surfaces, coated plates, aluminium sashes, resin plates, decorated steel plates, glass plates, optical films, optical members, electric member's surfaces, displays of electronic devices, etc. Surface protection tapes usually include a sheet or film, wherein the contact face with the surface to be protected is coated with a pressure-sensitive adhesive. When analysing the problems occurring with existing protective tapes it has been observed that the adhesive force of the tape, i.e. the force with which the adhesive adheres the tape to the surface to be protected, is an important characteristic in the protective properties of the protection tape. On the one hand, the adhesive force should be sufficiently high to minimise the risk to peeling of the tape from the surface to be protected during handling. However, with high adhesive force, the protection tape may be difficult to remove, be torn into pieces upon peeling, thereby leaving unwanted residues of adhesive and/or tape on the substrate surface after peeling. These residues may form a source for adhesion of further contamination, which is unwanted. Whereas the problem of unwanted residue may be solved by using an adhesive tape with small adhesive force, this has been found to increase the risk to uncontrollable and unwanted peeling of the protection tape from the substrate, thus leaving part of or the entire substrate surface unprotected.

There is thus a need to a protection tape which on the one hand shows an adhesion force which is sufficiently high to provide adequate substrate surface protection during handling, which on the other hand may be substantially completely be removed.

EP701822 in the name of Lohmann GmbH discloses a skin compatible, moisture resistant adhesive bandage, which comprises a water soluble adhesive applied to a water dispersible or water soluble carrier material, for example polyvinyl alcohol film. The adhesive consists of a mixture comprising
a. 60 - 90 wt.% of unsaturated vinylcarboxylic acid
b. 10 - 40 wt. % of a C4-12 alkyl(meth)acrylate
c. 0 - 10 wt. % of carboxyl groups containing (meth)acrylamid derivatives
d. 10 - 50 wt. % of a water soluble polyoxyalkylene or a polyoxyalkylene derivative
e. 10 - 40 wt. % of a polyfunctional alcohol
f. 3 - 25 wt. % of a plasticizer and
g. 0,1 - 5 wt. % of a cross-linking agent.

The bandage is preferably used in applications which besides a complete water solubility, shows high skin compatibility without discoloration during vapour sterilisation, as well as specific adhesion to different textile surfaces. A specific application for this type of bandages includes their use as a temporary fixation of surgery sheets to the human skin. In this application use is made of the properties that the besides the adhesive function, the bandage is water soluble in the conditions used to wash the surgery sheets.

EP555772 does not relate to packaging material, but discloses a water-soluble double-faced adhesive tape which is used for splicing paper etc in paper mills and printshops, when a transfer from the end of a previous paper roll to the start of a next paper roll needs to be accomplished. The adhesive tape comprises a water-disintegratable substrate, a first water-soluble adhesive layer formed on one side of said substrate in a proper width from one edge of said substrate, and a second water-soluble adhesive layer formed on the other side of said substrate in a proper width from the other edge of said substrate. The first and second adhesive layers are positioned a proper distance apart, such that a clearance exists between them and such that they do not over lap in width direction of the tape. The first and second adhesive layer are covered with respective first and second protection release layers which prevent the adhesive layers from sticking to the substarate when the tape is wound up into a roll.

It is the object of this invention to provide a surface protection tape for use as a wrapping material, wherein the protection tape shows an adhesion force to the surface to be protected which is sufficiently high to provide adequate surface protection and to minimize the risk to unwanted peeling from the surface, while simultaneously permitting a substantially complete removal of the protection tape from the surface to be protected.

### BRIEF DESCRIPTION OF THE INVENTION

Thereto, the present invention is characterized in that the adhesive tape comprises a layer of a water degradable polymer film, which is coated on at least one side with a layer of a water degradable pressure sensitive adhesive.

According to the present invention use is made of a water degradable protection adhesive tape, which comprises a layer of a water degradable polymer film coated on at least one side with a layer of a water degradable pressure sensitive adhesive, as a wrapping material to wrap at least part of an object. The tape of this invention may for example be used to wrap the entire object or to cover only part of the surface of an object. Therefore within the scope of this invention "wrapping" means anything from fully enrobing a substrate, to covering part of a surface of a substrate.

Within the scope of this invention "water degradable" means a material which degrades in aqueous solutions, a material which decomposes in aqueous solutions, a material which is dispersible in aqueous solutions, a material which is soluble in aqueous solutions, a material which is repulpable, or a material which shows a combination of these phenomena and this in aqueous solutions. A preferred aqueous solution includes water.

The protection tape of the present invention incorporates at least one layer of a water degradable pressure sensitive adhesive. The presence of the adhesive permits adhering, fixing and/or positioning the protection tape with respect to the substrate to be wrapped or protected. This positioning possibility is important to provide adequate protection where it is needed.

Removal of the protection tape from the substrate may be achieved by submerging, dipping or spraying with an aqueous solution or water, however any other technique considered suitable by the skilled person may be used as well. As a result of the water degradability, the use of peeling forces for removing the tape can be dispensed with thus minimizing the risk to damaging of the substrate by the peeling force while nevertheless a substantially complete removal of the tape may be achieved. Furthermore, a virtually complete removal of the protection tape may be achieved regardless of the strength of the adhesion force provided by the adhesive. The inventors had observed that with high adhesion force, usually needed to achieve adequate and durable protection, the tendency that residues of either adhesive alone or adhesive and polymer film remain upon peeling off protection tape was substantial.

The protection tape of the present invention is particularly suitable for wrapping, covering or protecting objects, or certain parts thereof which may be easily damaged or scratched during processing, storing, transport etc. The protection tape of the present invention is particularly suitable for use with objects which may contact water during use, since removal of the tape will take place during use upon water contact without the need to apply dedicated circumstances. The protection tape of the present invention is particularly suitable for use with objects with a high surface roughness, since the water degradability of the surface protection tape ensures that even with surfaces of relatively high surface roughness, a virtually complete removal of the protection tape may be achieved, at minimum risk to residue remaining on the surface. The presence of residue is unwanted as it is a source of dirt accumulation, fouling and/or growing of micro-organisms.

The protection tape of the present invention shows an additional advantage when used to protect substrates coated with a coating containing migrating components. It appears that in these applications a risk exists to migration of compounds into and reaction with the adhesive, to give rise to unwanted residue on the substrate surface after peeling of the protection tape. The present invention solves this problem as the protection tape is washed off together with any residues that may have migrated into the adhesive or the protection tape.

In the protection tape of the present invention the polymer film and the pressure sensitive adhesive may be chosen such that on the one hand sufficient adhesion of the polymer film is ensured, while on the other hand a sufficiently easy and/or complete removal of the polymer film and adhesive is ensured upon water contact. A minimum risk that residues remain is important as it often is a problem when physically peeling tape from a surface, for example by tearing it from the surface.

According to a preferred embodiment of the invention, the protective tape of the present invention is at least partly biodegradable.

According to a preferred embodiment the polymer film and the adhesive may be selected such that the adhesive shows a higher degradation rate in aqueous solution than the polymer film. According to another preferred embodiment the polymer and the adhesive may be selected such that both have a virtually similar degradation rate in aqueous solution. According to a further preferred embodiment the polymer film may have a higher degradation rate in aqueous solution than the adhesive. In that case however care may be taken to select the adhesive such that virtually complete removal is possible as well. According to a further preferred embodiment, removal of the tape may occur in such a way that it remains intact to a substantial degree.

Preferred according to the invention are those polymer film materials which are substantially completely water soluble or water repulpable. Upon water contact for example, the polymer film may for example fall apart into small pieces. Preferred adhesives according to the invention are those which are substantially completely water repulpable or soluble in water.

### DETAILED DESCRIPTION OF THE INVENTION.

### Protection tape.

The water degradable protection adhesive tape of the present invention comprises a layer of a water degradable polymer film, which is coated on at least one side with a layer of a water degradable pressure sensitive adhesive. Where the intended use so requires, both opposite sides of the polymer film may be coated with the same or with different adhesives. The adhesive may be applied as a continuous layer, it may however also be applied as on discrete locations.

In a preferred embodiment, the adhesive is coated with a release liner, to minimize the risk of contamination of the adhesive.

The protection tape will usually be commercially available in rolls of a large length.

According to a still further preferred embodiment of the invention, the adhesive tape which has been subjected to degradation in aqueous solution as described above, is biodegradable. This way, a protection tape may be provided which leaves a minimal environmental impact upon removal. Within the scope of this invention, biodegradability is measured according to EN 13 432.

The present invention also relates to the use of the water degradable protection adhesive tape as a wrapping material for an object. In particular, the present invention relates to the use of the protection tape as a wrapping material for articles which may contact water during use, which may easily be scratched or articles which are to be used in aqueous environment. Examples include a solar panel; a sanitary device for example a tooth brush, a razor, a comb or brush, a bandage, etc.; food articles; window surfaces; a plastic or glass door surface; a plastic or glass wall for example a door or wall for a shower. In an example a protection tape may be removed from the handle of an electrical tooth brush by holding the handle in a flow of tap water followed by tearing of the film. In another example an adhesive bandage is removed by contacting it with water, which obviates the need to painfully tear the bandage from the skin.

The present invention further relates to a method of removing the above-described water degradable protection tape by contacting the tape with an amount of water which is sufficient to substantially completely remove the tape. Water contact may be achieved by any suitable technique, for example by immersing or dipping in an aqueous solution, by rinsing or spraying an aqueous solution.

The use of a water-soluble protection adhesive tape has the advantage that the object enveloped by a positioned protective film can be directly accessed upon use, by contacting the packed object with water and tearing away of the tape.

### Polymer film material.

The polymer film used in the present invention is preferably a material which substantially completely degrades upon contact with an aqueous solution, preferably water. Within the scope of this invention "degradable" means a material which substantially completely degrades upon contacting an aqueous solution, a polymer film material which substantially completely decomposes in aqueous solution, a material which is substantially completely dispersible, a material which is substantially completely repulpable, a material which is substantially completely soluble or a material which shows a combination of these phenomena in aqueous solution. Preferred according to the invention are polymer materials which are substantially completely water soluble. Further preferred are polymer film materials which when having degraded in aqueous solution are also biodegradable. Particularly preferred are polymer film materials, which show good stability in humid environment, although deformation to some extent may be permitted.

Particularly preferred water-dispersible polymer films have a dispersability of at least 50%, preferably at least 75% or even at least 95% in water. Particularly preferred water-soluble polymer films have a solubility in water of at least 50%, preferably at least 75% or even at least 95%. It is further preferred that the dispersed and/or dissolved compounds are biodegradable.

Polymer materials suitable for use with the present invention are disclosed in literature and include those selected from polyester amides, polyvinyl alcohols, partly or fully hydrolysed polyvinyl alcohol, copolymers of vinyl alcohol and methacrylate, polyvinyl pyrrolidone, polyalkylene oxides for example polyethylene oxide, polymers of acrylamide, acrylic acid, cellulose, cellulose ethers such as carboxymethyl cellulose and methylcellulose, cellulose-esters, cellulose amides, polyvinyl acetates, polycarboxylic acids and salts, polyaminoacids or peptides, polyamides, polyacrylamide, copolymers of maleic/acrylic acids, alginates, polysaccharides including starch and gelatine, natural gums such as xanthum and carragum. More preferably the polymer material is selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, polyvinyl alcohols, polyvinyl alcohol copolymers and hydroxypropyl methyl cellulose, and mixtures thereof.

The water-soluble polymer material is preferably mainly composed of poly vinyl alcohol (PVA), because of the biodegradability of the material. Other preferred water-soluble materials include co-polymers of poly vinyl alcohol and poly methyl acrylate (PVA-PMA). The term poly vinyl alcohol as used herein also includes partially hydrolysed polyvinyl alcohol, for example polyvinyl alcohol which is hydrolysed from 60-98%, preferably 80% to 90%, to improve the water solubility of the material.

The average molecular weight of the polymer material used according to invention may vary within wide ranges.

Within the scope of the present invention, blends of two or more of the afore-mentioned polymer materials may be used. The use of polymer blends may for example be beneficial to control the mechanical and/or dissolution properties of the polymer film. For example, a blend may be used of a first polymer material with a higher water-solubility, and a second polymer material with a higher mechanical strength, higher flexibility or stretchability. The concentration ratio of the polymers in the blend may be varied taking into account the properties envisaged for the polymer film.

The polymer film may either comprise a monolayer film or it may be composed of two or more layers, for example a hydrophilic and a hydrophobic layer. Optionally one or both of the hydrophilic and hydrophobic layers may be composed of sub-layers, but preferably each is formed of a single layer. The layers of hydrophilic and hydrophobic polymer materials may be provided as continuous layers, but alternatively one of the layers may be continuous and the other of the layers may be discontinuous. It is preferred that where one of the layers is discontinuous, it is reticulate, e.g. in the form of a net. Furthermore, where one of the layers is discontinuous it is preferred that the hydrophobic layer is discontinuous.

Preferably the polymer material is formed into a film, a foil or sheet. The film, foil or sheet may be a mono- or a multi layer material. The film thickness may vary within some ranges and will usually vary from 10 to 120 micrometer, preferably from 15 to 100 micrometer, more preferably from 20 to 90 micrometer. The polymer material in the form of a film can for example be obtained by casting, blow-moulding, extrusion or blow extrusion of the polymer material, using any suitable method known from the art.

Preferably the film material is a substantially uniform material, which means that the film has substantially the same composition when comparing one piece of the film with another piece of the film a distance away from the first piece. The film itself however, may consist of more than one layer.

The polymer film may comprise the usual additives or ingredients. For example, it may be beneficial to add plasticisers, for example glycerol, ethylene glycol, diethyleneglycol, propylene glycol, sorbitol and mixtures thereof to control the flexibility and stretchability of the polymer film, disintegrating aids.

The polymer film may be opaque, but preferably the polymer film is at least partly transparent such that the contents can be seen and identified. Preferably the entire polymer film is transparent. Optionally the polymer film is printed with e.g. pictures or phrases.

The polymer film preferably is a flexible wrap, contrary to solid, self standing containers. The polymer film may however have some firmness and strength. The tear strength of the polymer film is preferably sufficiently high to permit tearing of the polymer film from the covered object, in one piece, at minimum risk to tearing apart of the film. The flexible wrap preferably surrounds the contents such that there is little room to move. The polymer film material is preferably deformable upon heating to a certain temperature.

Examples of suitable commercially available polymer film materials include those provided by MonoSol UK, for example L330, L336, L337, L340, L710, L711, L712 and A200, A127 or Solublon commercially available from Harke Packaging Products.

### ADHESIVE.

The polymer film of the present invention is preferably coated on at least one side with a pressure-sensitive adhesive, which substantially completely degrades upon contact with an aqueous solution, preferably water. Within the scope of this invention "degrading" means a pressure sensitive adhesive which substantially completely decomposes or degrades in an aqueous solution, a pressure sensitive adhesive which is substantially completely repulpable in an aqueous solution, a pressure sensitive adhesive which is substantially completely dispersible in an aqueous solution, a pressure sensitive adhesive which is substantially completely soluble in aqueous solution or a pressure sensitive adhesive which shows a combination of two or more of these phenomena. A preferred embodiment of an aqueous solution according to the invention is water. Preferred according to the invention are pressure sensitive adhesives which are substantially completely water soluble. The pressure sensitive adhesive is however selected such that it has at least a comparable, but preferably a higher degradation rate than the polymer film, to ensure easy film removal.

Examples of suitable pressure sensitive adhesives include acrylic pressure-sensitive adhesives containing an acrylic polymer, in particular a polyacrylate and/or a polymethacrylate; vinyl ether type pressure-sensitive adhesives such as poly(vinyl methyl ether), poly(vinyl ethyl ether), and poly(vinyl isobutyl ether); vinyl ester type pressure-sensitive adhesives such as vinyl acetate/ethylene copolymers; and polyester type pressure-sensitive adhesives produced from a carboxylic acid component such as dimethyl terephthalate, dimethyl isophthalate, or dimethyl phthalate, and a polyhydric alcohol component such as ethylene glycol and the like. Particularly suitable pressure sensitive adhesives are those disclosed in EP022.339.

The polyacrylate pressure-sensitive adhesives may be used alone, or two or more of them may be used as a mixture mixed through a known mixing process or agitating process.

Polyacrylate and/or a polymethyacrylate based pressure-sensitive adhesives are preferred. Suitable examples include homopolymers of (meth)acrylate or copolymers thereof with a copolymerizable monomer. Examples of (meth)acrylate and the copolymerizable monomer include alkyl (meth)acrylate (e.g., methyl ester, ethyl ester, butyl ester, 2-ethylhexyl ester and octyl ester), glycidyl (meth)acrylate, (meth)acrylic acid, itaconic acid, maleic anhydride, (meth)acrylamide, (meth)acrylic N-hydroxyamide, alkylaminoalkyl (meth) acrylate (e.g., dimethylaminoethyl methacrylate and t-butylaminoethyl methacrylate), vinyl acetate, styrene and acrylonitrile. One or more kinds of the above-mentioned monomers can be used. The polymerization process is not especially limited and can be any process known or common to those skilled in the art, such as ultraviolet-ray polymerization, solution polymerization, or emulsion polymerization. Among them, ultraviolet-ray polymerization is preferred especially when a thick pressure-sensitive adhesive layer is to be formed.

Preferably use is made of alkyl(meth)acrylate, whose homopolymer (polymer obtained by homopolymerization) generally has a glass transition temperature of not higher than -50°C. As used herein, the main monomer of acrylic polymer means a monomer having a (meth)acrylic acid component, from among the above-mentioned monomers. Particularly preferable examples of the main monomer include butyl(meth)acrylate, 2-ethylhexyl(meth)acrylate, n-propyl(meth)acrylate, n-octyl(meth)acrylate and the like.

The adhesive layer may be a cross-linked adhesive layer or a non-cross-linked adhesive layer. Examples of suitable cross-linking treatments include chemical crosslinking, ion cross-linking and physical crosslinking using electron beam, ultraviolet light and the like. Examples of suitable crosslinking agent include metal salts such as zinc acetate and the like, polyisocyanate crosslinking agents, epoxy crosslinking agents, and alkyl-etherified melamine crosslinking agents, amide compounds, amine compounds, acid anhydride, peroxide and the like. Cross-linking of the adhesive may be preferred in order to control adhesive force.

The pressure-sensitive adhesive layer for use in the present invention may contain suitable additives. Specifically, the pressure-sensitive adhesive layer may contain the conventional additives for control of the adhesion properties or for other purposes. Examples of such additives include various known conventional softeners, tackifiers, olefin-based resins such as those used for the backing layer layer, silicone-based polymers, liquid acrylic copolymers, phosphoric ester-based compounds, anti-aging agents, hindered amine light stabilizers, ultraviolet absorbing agents, surface lubricants, levelling agents, plasticizers, low-molecular-weight polymers, antioxidants, corrosion inhibitors, polymerization inhibitors, silane coupling agents, inorganic or organic fillers (such as calcium oxide, magnesium oxide, silica, zinc oxide, and titanium oxide), powders, particles or flakes of metals, colorants pigments or the like, and heat-resistant stabilizers.

Particularly preferred for use in the protection tape of this invention is a water-soluble pressure-sensitive adhesive composition such as the one disclosed in EP022.339, in particular an adhesive composition comprising a composition obtained by the solution polymerization of a water-soluble ethylenically unsaturated monomer, alone or in combination with a water-insoluble ethylenically unsaturated monomer copolymerizable with the water-soluble ethylenically unsaturated monomer, in the presence of a plasticizer selected from the group consisting of polyetherpolyols and polyhydric alcohols having a molecular weight of less than about 3.000 and which is liquid at room temperature. The unsaturated monomer includes at least one water-soluble ethylenically unsaturated monomer for example those containing a carboxyl group or groups in the molecule, such as acrylic acid, methacrylic acid, crotonic acid, maleic acid, fumaric acid, itaconic acid, monoalkylmaleic acid, monoalkyl fumaric acid, monoalkylitaconic acid and the like. The water-soluble ethylenically unsaturated monomer may be used in combination with water-insoluble ethylenically unsaturated monomers which are copolymerizable with the water-soluble ethylenically unsaturated monomer. Preferred examples of water-insoluble ethylenically unsaturated monomers include alkyl acrylate or alkyl methacrylate containing 14 or less carbon atoms, vinyl acetate, dialkyl esters or dibasic unsaturated acids, such as maleic acid, fumaric acid or itaconic acid, containing 8 or less carbon atoms, and the like. In addition, vinyl propionate, acrylonitrile, styrene, etc., can be used. The adhesive composition contains as a polymer component at least an addition copolymer of the unsaturated monomer and the alcoholic plasticizer, and, if desired, another water-soluble plasticizer and a polyfunctional compound. The solubility of the polymerization product may be increased by cross-linking with a metal ion or amine through some of the carboxyl groups.

The alcoholic plasticizer is preferably selected from the group consisting of polyetherpolyols and polyhydric alcohols including glycerin, trihydroxyisobutane, erythrite, pentaerhthrite, xythrite, adonite, allodulcit, and sorbite. Examples of polyetherpolyols of this type available commercially include Sunnix TP-400, GP-600, GP-1000, GP-3000, GEP-2800, and SP-750, all produced by Sanyo Chemical Industries Co., Ltd. The numbers indicate the average molecular weights of the polyetherpolyols. Ordinary polyetherpolyols such as polyethyleneglycol, polypropyleneglycol or a copolymer of ethylene oxide and propylene oxide can also be used. The above described polyhydric alcohols can also be used alone. The alcoholic plasticizer is generally used in an amount from about 20 to 400 parts by weight per 100 parts by weight of the unsaturated monomer.

The pressure sensitive adhesive is preferably chosen in such a way that it shows an adhesive force which is sufficiently high to ensure adequate positioning of the protection film on the object to be packaged. The adhesive force may be controlled by selecting an appropriate adhesive and/or an appropriate degree of cross-linking and/or an appropriate adhesive layer thickness. The pressure sensitive adhesive is further preferably chosen in a way that its water rate is sufficiently small to minimize the risk to degradation in humid environment, but sufficiently high to permit degradation upon water contact to permit removing the remainder of the protective tape in one piece, or at least at minimal risk to tearing apart in such a way that removal of the film would be put at risk. Removal of the protection tape in its entirety i.e. adhesive and film included is important as remainders thereof provide an ideal basis for the growth of micro-organisms, fouling and accumulation of dirt.

The thickness of the pressure-sensitive adhesive layer for use in the present invention may vary within wide ranges, but is generally adapted such that optimum degradability of the adhesive tape is ensured in water. The thickness of the pressure-sensitive adhesive will usually vary from about 10 to 200 µm, preferably from 7 to 150 µm, more preferably 5 to 75 µm, more preferably from 10 to 50 µm, most preferably from 10 to 40 µm. These thicknesses permit providing sufficient adhesive force combined with a sufficiently high water degradation rate.

The pressure-sensitive adhesive layer can be formed by any method considered suitable by the skilled person. Examples of suitable methods of forming the pressure-sensitive adhesive layer include a method in which a solution or emulsion of a pressure-sensitive adhesive in a solvent, etc. is coated on the surface (one surface or both surfaces) of the surface protection tape release liner; and a method in which a pressure-sensitive adhesive is melt extruded and coated or laminated on the polymer film. Incidentally, after the surface protection tape polymer film has been obtained by rolling by means of a calender device having a measure capable of individually changing the rotational speed of each calender roll, the pressure-sensitive adhesive may be continuously coated to form a pressure-sensitive adhesive layer.

### RELEASE LINER.

Although the above-described adhesive tape will usually be used without release liner, if so desired, it may be provided with a release liner. As a release liner any known or common release liner may be used. Exemplary release-liner substrates include plastic base films, including polyester films, polyolefin resin films, poly(vinyl chloride) films, polyimide films, polyamide films (nylon films), and rayon films; papers, as well as assemblies of these materials (assemblies of two or three layers) stacked through lamination or coextrusion.

The release liner may be treated for easy peeling on the interfacial surface side contacting the adhesive, so as to facilitate peeling from the adhesive layer.

The invention is further illustrated in the examples below.

### Example 1

A protection tape was produced by coating a polyvinyl alcohol film commercially available from Harcke Chemical, grade KL, having a thickness of 40 µm, with a layer of a pressure sensitive adhesive of a thickness of 5 µm. The pressure sensitive adhesive used was obtained from Nitto Denko.

The protection tape was used to cover
1) a plate of ABS,
2) a plate of aluminium,
3) plate 1 further wrapped with PE-foam
4) plate 2 further wrapped with PE-foam
5) plate 3 further put in an envelope
6) plate 4 further punt in an envelope

The plates were subjected to ageing at room temperature and an atmosphere of 40°C and 95°C relative humidity for 21 days. Then the adhesion force was measured according to EN1939. From the results summarized in the table below it appears that some deformation of the protection film took place. The deformation was worse for the non-wrapped plates. Whereas the protection film could be easily removed in once piece from the non-aged plates, ageing had the effect that the film was more difficult to remove. Ageing at higher temperatures caused the peel force to increase significantly :

| Adhesion force (cN/20 mm) | **Alu** | **ABS** |
|---|---|---|
| initial | 107 | 124 |
| aged room temperature | 116 | 165 |
| aged 40°C, 95°C relative humidity | 181 | 255 |
| aged 40°C, 95°C relative humidity, wrapped | 222 | 261 |

## Claims

1. A water degradable protective adhesive tape, the tape comprising a layer of a water degradable polymer film, which is at least partly coated on at least one side, with a layer of a water degradable pressure sensitive adhesive.

2. A protective adhesive tape as claimed in claim 1, wherein the layer of the water degradable pressure sensitive adhesive is coated with a release liner.

3. A protective adhesive tape as claimed in claim 1 or 2, wherein the polymer film comprises polyvinylalcohol.

4. A protective adhesive tape as claimed in any one of the preceding claims wherein the polymer film has a thickness of between 10 µm and 120 µm.

5. A protective adhesive tape as claimed in any one of the preceding claims, wherein the pressure sensitive adhesive comprises an acrylic polymer.

6. A protective adhesive tape as claimed in claim 5, wherein the adhesive is a polymer comprising one or more C₂-C₁₈ alkyl esters of (meth)acrylic acid.

7. A protective adhesive tape as claimed in any one of the preceding claims, wherein the pressure sensitive adhesive layer has a thickness of between 10 to 200 µm, preferably from 7 to 150 µm, more preferably 5 to 75 µm.

8. Use of the water degradable protective adhesive tape according to any one of claims 1-7, as a wrapping material for an object.

9. Use according to claim 8, wherein the object is an object for use in aqueous environment.

10. Use according to claim 9, wherein the object is a sanitary device selected from the group of a tooth brush handle, razor, bandage, ...

11. A method of removing the water degradable protective tape according to any one of claims 1-7, wherein the tape is removed by immersing in aqueous solution or by rinsing or spraying an aqueous solution.
